# EUROPÄISCHE PATENTANMELDUNG

(11) **EP 3 839 668 A1**
(43) Veröffentlichungstag der Anmeldung: **23.06.2021**
(21) Anmeldenummer: 19216944.9
(22) Anmeldetag: 17.12.2019
(51) Int. Cl.: G05B 19/042, G06F 21/50

(54) **INTEGRITÄTSÜBERWACHUNGSSYSTEM UND VERFAHREN ZUM BETREIBEN EINES INTEGRITÄTSÜBERWACHUNGSSYSTEMS SOWIE EINE INTEGRITÄTSÜBERWACHUNGSEINHEIT**

(71) Anmelder: Siemens Aktiengesellschaft, 80333 München (DE)
(72) Erfinder: Falk, Rainer, 85586 Poing (DE); Feist, Christian Peter, 80689 München (DE); Fries, Steffen, 85598 Baldham (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)

(57) **Zusammenfassung**

Die Erfindung betrifft ein Integritätsüberwachungssystem, ein Verfahren zum Betreiben des Integritätsüberwachungssystems und eine Integritätsüberwachungseinheit. Das Integritätsüberwachungssystem zur Laufzeit-Integritätsüberwachung einer Steuerungsvorrichtung umfasst die Steuerungsvorrichtung mit einer Automatisierungsvorrichtung zum Sammeln von Betriebszustandsdaten der Steuerungsvorrichtung. Das System umfasst weiterhin eine direkt mit der Steuerungsvorrichtung lösbar verbindbare Integritätsüberwachungseinheit zum Überwachen des Integritätsstatus der Steuerungsvorrichtung anhand von von der Automatisierungsvorrichtung an die Integritätsüberwachungseinheit übermittelten Betriebszustandsdaten. Die Integritätsüberwachungseinheit wird an die Steuerungsvorrichtung zur Datenübertragung angeschlossen. In der Automatisierungsvorrichtung der Steuerungsvorrichtung werden Betriebszustandsdaten gesammelt. Die Betriebszustandsdaten werden von der Automatisierungsvorrichtung an die Integritätsüberwachungseinheit übertragen. In der Integritätsüberwachungseinheit werden die Betriebszustandsdaten ausgewertet. Nach einem Überprüfen eines Integritätsstatus der Steuerungsvorrichtung erfolgt die Ausgabe eines Integritätsstatus.

## Beschreibung

Die Integrität von Automatisierungsgeräten, insbesondere von Steuergeräten, speicherprogrammierbaren Steuerungen und industriellen Geräten des Internets der Dinge (IoT-Geräte) muss gewährleistet sein, um einen fehlerfreien Betrieb zu ermöglichen. Somit sollte die Integrität dieser Geräte auch im laufenden Betrieb überwacht werden ("Device Health Check").

Angriffe oder Attacken auf ein IT-System oder ein ITbasiertes Automatisierungssystem, d.h. unerlaubte Zugriffe zum Schaden eines solchen Systems, können derzeit bereits mittels geeigneter Vorrichtungen bzw. Software detektiert werden, wie z.B. mittels eines Host basierten Intrusion Detection Systems (IDS).

Spezielle Software für das IDS muss dazu installiert und aktuell gehalten. Dies ist bei ressourcen-beschränkten oder betriebskritisch eingesetzten Komponenten nachteilig häufig nicht möglich. Auch bei Altgeräten (Legacy-Geräten) oder bei nicht mit dem Internet verbundenen Geräten ist das Installieren einer solchen Software nachteilig häufig nicht möglich. Auch Zulassungsregularien, insbesondere industrieller Steuerungen oder Anlagen, können dem Installieren einer speziellen Software nachteilig entgegenstehen.

Es ist ebenfalls bekannt, anhand des Stromverbrauchs oder der elektromagnetischen Strahlung auf die Integrität eines Geräts zu schließen ("Power Fingerprinting"). Dieses Verfahren ist allerdings nachteilig sehr aufwendig, da sowohl spezielle Hardware- und Softwarekomponenten nötig sind und das System angelernt werden muss.

Daher ist es Aufgabe der Erfindung, ein System und ein Verfahren zum Betreiben eines Systems anzugeben, welches die Integrität eines Automatisierungsgerät im laufenden Betrieb überwacht und dabei die genannten Nachteile überwindet.

Das erfindungsgemäße Integritätsüberwachungssystem zur Laufzeit-Integritätsüberwachung wenigstens einer Steuerungsvorrichtung umfasst die wenigstens eine Steuerungsvorrichtung. Die Steuerungsvorrichtung wiederum umfasst eine Automatisierungsvorrichtung zum Sammeln von Betriebszustandsdaten der Steuerungsvorrichtung. Das Integritätsüberwachungssystem umfasst weiterhin eine direkt mit der Steuerungsvorrichtung lösbar verbindbare Integritätsüberwachungseinheit zum Überwachen des Integritätsstatus der Steuerungsvorrichtung anhand von Betriebszustandsdaten, die von der Automatisierungsvorrichtung an die Integritätsüberwachungseinheit übermittelt werden.

Das erfindungsgemäße Verfahren zum Betreiben eines Integritätsüberwachungssystems umfasst mehrere Schritte. Zunächst wird das Integritätsüberwachungssystem bereitgestellt. Das Integritätsüberwachungssystem umfasst eine Steuerungsvorrichtung, welche wiederum eine Automatisierungsvorrichtung zum Sammeln von Betriebszustandsdaten der Steuerungsvorrichtung umfasst. Weiterhin umfasst das Integritätsüberwachungssystem eine direkt mit der Steuerungsvorrichtung lösbar verbindbare Integritätsüberwachungseinheit zum Überwachen des Integritätsstatus der Steuerungsvorrichtung anhand von Betriebszustandsdaten, welche von der Automatisierungsvorrichtung an die Integritätsüberwachungseinheit übermittelt werden. Die Integritätsüberwachungseinheit wird an die Steuerungsvorrichtung zur Datenübertragung angeschlossen. In der Automatisierungsvorrichtung der Steuerungsvorrichtung werden Betriebszustandsdaten der Steuerungsvorrichtung gesammelt. Die Betriebszustandsdaten werden von der Automatisierungsvorrichtung an die Integritätsüberwachungseinheit übertragen. In der Integritätsüberwachungseinheit werden die Betriebszustandsdaten ausgewertet, um einen Integritätsstatus der Steuerungsvorrichtung zu überprüfen. Der Integritätsstatus wird anschließend ausgegeben.

Die erfindungsgemäße Integritätsüberwachungseinheit zum Überwachen eines Integritätsstatus wenigstens einer Steuerungsvorrichtung ist lösbar verbindbar mit wenigstens einer der Steuerungsvorrichtungen ausgestaltet.

Als Steuerungsvorrichtung werden insbesondere Steuerungskomponenten, Steuerungen und Steuergeräte verstanden. Diese können mit Sensoren und/oder Aktoren verbunden sein, um ein technisches System zu überwachen und/oder um auf das technische System einzuwirken.

Mit Laufzeit-Integritätsüberwachung wird eine Überwachung der Integrität im laufenden Betrieb der Steuerungsvorrichtung beschrieben.

Als Steuerungsvorrichtung werden insbesondere Steuerungskomponenten, speicherprogrammierbare Steuerungen und Steuergeräte verstanden.

Direkt verbindbar heißt, dass die Integritätsüberwachungseinheit insbesondere über eine Steckverbindung oder ein Kabel mit der Steuerungsvorrichtung verbunden ist. Die Integritätsüberwachungseinheit ist insbesondere nicht über eine Netzwerkverbindung mit der Steuerungsvorrichtung verbunden.

Vorteilhaft kann mithilfe des erfindungsgemäßen Integritätsüberwachungssystems und des erfindungsgemäßen Verfahrens eine Steuerungsvorrichtung in Echtzeit auf ihre Integrität überwacht werden, wobei die Steuerungsvorrichtung selbst unverändert bleiben kann. Die Integritätsüberwachungseinheit ist ansteckbar an die Steuerungsvorrichtung ausgestaltet. Sie kann vorteilhaft mit der Steuerungsvorrichtung verbunden werden, ohne diese selbst zu verändern. Somit ist es vorteilhaft möglich, die Integrität einer Steuerungsvorrichtung im Betrieb zu analysieren, ohne direkt in die Steuerungsvorrichtung eingreifen zu müssen. Die Integrität der Steuerungsvorrichtung wird außerhalb der Steuerungsvorrichtung selbst überwacht. Ebenso ist es vorteilhaft möglich Altgeräte, Geräte ohne Internetanbindung oder Geräte mit Zulassungsbeschränkungen mit der Integritätsüberwachungseinheit zu verbinden. Die Geräte selbst müssen dazu nicht verändert werden. Beispielsweise können Betriebszustandsdaten über eine lokale Geräteschnittstelle wie RS232, RS485, JTAG, SPI, I2C, USB oder ähnlich bereitgestellt werden. Es ist ebenfalls möglich, den Umfang der bereitgestellten Betriebszustandsdaten über ein Firmware-Update von Altgeräten zu erweitern, um umfangreichere Überprüfungen zu ermöglichen.

Weiterhin werden die Betriebszustandsdaten vorteilhaft nicht in ein Netzwerk übertragen. Sie werden direkt an die Integritätsüberwachungseinheit übermittelt. Die Betriebszustandsdaten werden vorzugsweise direkt auf der Integritätsüberwachungseinheit ausgewertet.

In einer vorteilhaften Ausgestaltung und Weiterbildung der Erfindung umfasst das Integritätsüberwachungssystem eine Schnittstelleneinheit, die mit der Steuerungsvorrichtung und der Integritätsüberwachungseinheit verbunden ist. Besonders vorteilhaft umfasst die Schnittstelleneinheit eine RS232-Schnittstelle, eine RS485-Schnittstelle, eine JTAG-Schnittstelle, eine USB-Schnittstelle, eine SPI-Schnittstelle, eine I2C-Schnittstelle oder einen Rückwandbus. Besonders bevorzugt wird ein Rückwandbus, der auf üblichen Steuergeräten häufig zur Anbindung von zusätzlichen Ein-/Ausgabemodulen vorgesehen ist. Dies hat den Vorteil, dass eine ohnehin häufig verfügbare Hardware-Schnittstelle für eine Integritätsüberwachung mitverwendet werden kann.

In einer weiteren vorteilhaften Ausgestaltung und Weiterbildung der Erfindung ist die Integritätsüberwachungseinheit mit der Steuerungsvorrichtung mechanisch verriegelt verbunden. Insbesondere erfolgt die Verriegelung über eine Einweg-Rastvorrichtung, eine Plombe, durch eine Nietschraube, eine Sicherheitsschraube oder ein mechanisches Schloss. Vorteilhaft wird das unzulässige Lösen oder Abnehmen der Integritätsüberwachungseinheit erschwert oder somit verhindert. In einer weiteren Variante erfolgt beim Verbinden ein mechanisches Einrasten, um ein Lösen der mechanischen Verbindung zu verhindern oder zumindest zu erschweren. In einer Variante kann auf der Rückseite des Steuervorrichtung oder des Integritätsüberwachungssystems eine Entriegelungsvorrichtung, die insbesondere durch Drücken betätigt werden kann, vorgesehen sein. Vorteilhaft ist die Entriegelungsvorrichtung im montierten Zustand von Steuerungsvorrichtung mit der Integritätsüberwachungseinheit nicht zugänglich. Dadurch wird ein unbefugtes Lösen der Verriegelung verhindert. Weiterhin ist es vorteilhaft möglich zu erkennen, wenn eine Integritätsüberwachungseinheit widerrechtlich entfernt wurde, insbesondere anhand einer aufgebrochenen Plombe. In einer weiteren Variante kann das Entfernen der Integritätsüberwachungseinheit auch zusätzlich protokolliert werden. Die Integritätsüberwachungseinheit ist dabei räumlich nah an der Steuerungsvorrichtung, insbesondere über eine Steckverbindung mechanisch verbunden. Sie sind insbesondere nicht über ein Netzwerk miteinander verbunden.

In einer weiteren vorteilhaften Ausgestaltung und Weiterbildung der Erfindung ist die Steuerungsvorrichtung eine speicherprogrammierbare Steuerungsvorrichtung, insbesondere einer industriellen Anlage oder einer Werkzeugmaschine. Insbesondere im industriellen Bereich ist das Überwachen der Integrität der speicherprogrammierbaren Steuerungsvorrichtung während des Betriebs nötig, aber oft nicht innerhalb der Steuerungsvorrichtung wünschenswert, um ein Eingreifen in die Steuerungsvorrichtung selbst zu verhindern. Mittels der lösbar verbindbaren Integritätsüberwachungseinheit ist es möglich, auch industrielle speicherprogrammierbare Steuerungsvorrichtungen kontinuierlich zu überwachen, ohne in die Steuerungsvorrichtung selbst eingreifen zu müssen.

In einer weiteren vorteilhaften Ausgestaltung und Weiterbildung der Erfindung werden die Betriebszustandsdaten kryptographisch geschützt von der Steuerungsvorrichtung an die Integritätsüberwachungseinheit übertragen. Vorteilhaft wird die Sicherheit des Integritätsüberwachungssystems zusätzlich erhöht.

In einer weiteren vorteilhaften Ausgestaltung und Weiterbildung der Erfindung werden als Betriebszustandsdaten laufende Prozesse, Tasks, eine Speicherauslastung, eine Prozessorlast, eine Eingangs-Ausgangs-Last und/oder Prüfwerte von Speicherbereichen, insbesondere von Firmware, RAM und/oder eines Konfigurationsspeichers bereitgestellt. Ebenso können physikalische Parameter wie insbesondere die Temperatur des Prozessors mit übertragen werden.

In einer weiteren vorteilhaften Ausgestaltung und Weiterbildung der Erfindung wird die Integritätsüberwachungseinheit während eines laufenden Betriebs der Steuerungsvorrichtung abgenommen, aktualisiert und wieder an die Steuerungsvorrichtung angeschlossen. Die Integritätsüberwachungseinheit kann somit vorteilhaft Aktualisierungen (Updates) bekommen, ohne dass die Steuerungsvorrichtung selbst verändert wird. Dies kann nicht nur während eines Wartungsfensters geschehen, bei dem das überwachte oder gesteuerte technische System sich nicht im operativen betrieb befindet, sondern auch im laufenden Betrieb des technischen Systems, insbesondere der industriellen Anlage.

In einer weiteren vorteilhaften Ausgestaltung und Weiterbildung der Erfindung authentisiert sich die Integritätsüberwachungseinheit gegenüber der Steuerungsvorrichtung und/oder die Steuerungsvorrichtung authentifiziert die Integritätsüberwachungseinheit. Es ist vorteilhaft möglich, dass in Abhängigkeit des verwendeten Authentisierungszertifikats und/oder in Abhängigkeit einer eingerichteten Konfiguration die Steuerungsvorrichtung ermittelt, welche Betriebszustandsdaten übertragen werden. Weiterhin ist es vorteilhaft möglich, dass die Steuerungsvorrichtung nur dann einen regulären Betriebsmodus aktiviert oder beibehält, solange eine authentisierte, zulässige Integritätsüberwachungseinheit verbunden ist.

In einer weiteren vorteilhaften Ausgestaltung und Weiterbildung der Erfindung identifiziert und/oder authentisiert sich die Steuerungsvorrichtung gegenüber der Integritätsüberwachungseinheit. Die Authentisierung kann über ein Authentisierungszertifikat und/oder eine Authentisierungskonfiguration, wie zum Beispiel einen symmetrischen Schlüssel, erfolgen. Vorteilhaft kann die Integritätsüberwachungseinheit prüfen, ob es tatsächlich mit der korrekten Steuerungsvorrichtung, insbesondere mit einer kompatiblen Steuerungsvorrichtung, verbunden ist. Dadurch kann vorteilhaft verhindert werden, dass fehlerhaft Integritätsverletzung erkannt werden. Insbesondere ist es möglich, zu überprüfen, ob die installierte Firmware-Version unterstützt wird und/oder ob die erwarteten Projektierungsdaten konfiguriert sind. Die Laufzeit-Integritätsüberwachung erfolgt nur für eine kompatible Steuerungsvorrichtung.

In einer weiteren vorteilhaften Ausgestaltung und Weiterbildung der Erfindung erfolgt nach dem Auswerten der Betriebszustandsdaten und einem Erkennen einer Integritätsverletzung als Integritätsstatus ein Neustart, ein sicherer Betriebsmodus, eine Alarmmeldung und/oder ein Logeintrag. Vorteilhaft erfolgt insbesondere nach einem ersten Erkennen einer Integritätsverletzung ein Neustart, nach einer weiterhin bestehenden Integritätsverletzung ein Betrieb in einem sicheren Betriebsmodus, eine Alarmmeldung oder ein Logeintrag. Insbesondere eine Alarmmeldung kann vorteilhaft an einen Cloud-Speicher übertragen werden.

In einer weiteren vorteilhaften Ausgestaltung und Weiterbildung der Erfindung übermittelt die Integritätsüberwachungseinheit Anforderungen an Art und Umfang der Betriebszustandsdaten an die Steuerungsvorrichtung. Vorteilhaft werden keine Betriebszustandsdaten übermittelt, die von der Integritätsüberwachungseinheit nicht ausgewertet werden können. Insbesondere können auch Mindestanforderungen an bereitzustellende Betriebszustandsdaten angegeben werden. Insbesondere können Mindestanforderungen die Art der Daten und/oder eine Mindestmenge an Betriebsdaten festlegen, die benötigt wird, damit die Integritätsüberwachungseinheit eine Überwachung durchführen kann. Insbesondere kann die Integritätsüberwachungseinheit auch als Status melden, dass sie eine Überwachung durchführt.

In einer weiteren vorteilhaften Ausgestaltung und Weiterbildung der Erfindung umfassen die Betriebszustandsdaten Nutzdaten und Signalisierungsdaten, wobei die Nutzdaten rückwirkungsfrei unidirektional übertragen werden. Diese Übertragung ist rückwirkungsfrei. Das heißt hier, dass Nutzdaten aus der Steuerungsvorrichtung nur unidirektional in die Integritätsüberwachungseinheit übertragen werden, ein Übertragen von Nutzdaten von der Integritätsüberwachungseinheit in die Steuerungsvorrichtung hingegen nicht möglich ist. Dies kann insbesondere durch eine Hardware-basierte Datendiode (One-Way-Gateway), durch eine optische Übertragung, z.B. über einen Lichtwellenleiter, oder durch ein Dual-Port-RAM, bei dem ein Port ein Nur-Lese-Port ist, sichergestellt werden. Weiterhin wird dadurch ermöglicht, die Integritätsüberwachungseinheit unabhängig von der kritischen Steuerungsfunktionalität zu entwickeln, zu testen und zu aktualisieren.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein Integritätsüberwachungssystem mit einer Integritätsüberwachungseinheit, einer Steuerungsvorrichtung und einer Steckverbindung;
- Figur 2: ein Integritätsüberwachungssystem mit einer Integritätsüberwachungseinheit, einer Steuerungsvorrichtung und zwei Datenverbindungen;
- Figur 3: ein Verfahrensfließbild zur Integritätsüberwachung einer Steuerungsvorrichtung.

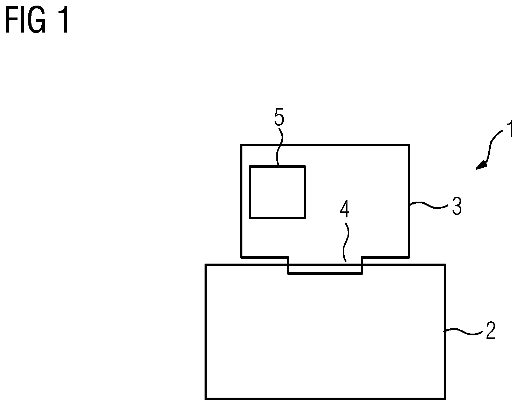

Figur 1 zeigt ein Integritätsüberwachungssystem 1 mit einer Steuerungsvorrichtung 2 und einer Integritätsüberwachungseinheit 3. Die Integritätsüberwachungseinheit 3 ist mittels einer Steckverbindung 4 lösbar mit der Steuerungsvorrichtung 2 verbunden. Die Integritätsüberwachungseinheit 3 umfasst eine Ausgabeeinheit 5. Die Ausgabeeinheit 5 ist insbesondere ein Leuchtmittel oder ein Display.

Die Integritätsüberwachungseinheit 3 ist eine zur Steuerungsvorrichtung 2 separate Hardwareeinheit. In der Integritätsüberwachungseinheit 3 wird die Integrität der Steuerungsvorrichtung 2 während des Betriebs der Steuerungsvorrichtung 2 überwacht. Vorteilhaft erfolgt die Integritätsüberwachung außerhalb der überwachten Komponente, also außerhalb der Steuerungsvorrichtung 2. Vorteilhaft kann die Integritätsüberwachungseinheit 3 somit unabhängig von der Steuerungsvorrichtung 2 aufgesetzt und aktualisiert werden. In anderen Worten ist es nicht nötig, die überwachte Komponente, also die Steuerungsvorrichtung 2, zu modifizieren. Insbesondere ist somit eine Laufzeit-Überwachung von betriebskritischen Steuerungsvorrichtungen 2 möglich.

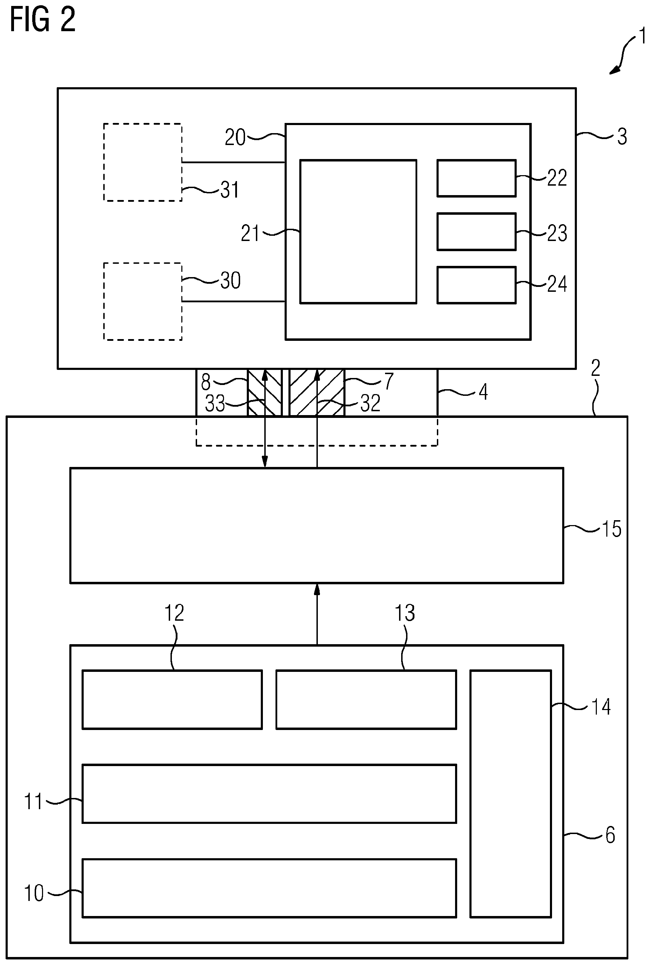

Figur 2 zeigt einen detaillierten Aufbau eines Integritätsüberwachungssystems 1. Das Integritätsüberwachungssystem 1 umfasst, wie bereits in Figur 1 gezeigt, eine Steuerungsvorrichtung 2 und eine Integritätsüberwachungseinheit 3. Die Integritätsüberwachungseinheit 3 ist insbesondere wiederum über eine Steckverbindung 4 an die Steuerungsvorrichtung 2 angebunden.

Die Steuerungsvorrichtung 2 umfasst eine Steuerungsautomatisierungseinheit 6, die die Steuerungs- und Überwachungsfunktionalität für einen technischen Prozess realisiert. Die Steuerungsautomatisierungseinheit 6 wiederum umfasst eine Kontrolleinheit 13, die die eigentliche Steuerungsfunktionalität gemäß den Projektierungsdaten 12 (Konfigurationsdaten) realisiert, und eine Selbst-Test-Einheit 14. Die Selbst-Test-Einheit 14 dient dazu, z.B. Hardware-Defekte zu erkennen. Eine Selbst-Test-Einheit nach dem Stand der Technik kann jedoch keine absichtlichen Manipulationen oder einen IT-Angriff erkennen. Die Steuerungsautomatisierungseinheit 6 umfasst weiterhin Hardware 10, z.B. einen Mikroprozessor, Mikrokontroller, FPGA (Field Programmable Gate Array), SoC (System on Chip), ASIC (Application-specific Integrated Circuit), Speicherbausteine (Flash, ROM, EEPROM, RAM) und in einem Speicherbaustein hinterlegte und auf einem Mikroprozessor oder Mikrocontroller ausgeführte Firmware 11. Weiterhin sind in der Steuerungsautomatisierungseinheit 6 Projektierungsdaten (Konfigurationsdaten) 12 hinterlegt, durch die die Steuerungsfunktionalität definiert ist. Die Steuerungsautomatisierungseinheit 6 übergibt Daten zum Betrieb der Steuerungsvorrichtung 2 an die Integritätsüberwachungsdaten-Extraktionseinheit 15. In der Integritätsüberwachungsdaten-Extraktionseinheit 15 werden während des Betriebs Betriebszustandsdaten der Steuerungsvorrichtung 2 ausgelesen und gegebenenfalls nach einer Vorverarbeitung bereitgestellt.

Betriebszustandsdaten können Nutzdaten 32 und Signalisierungsdaten 33 sein. Als Nutzdaten 32 werden die Daten bezeichnet, welche zum Betrieb der Steuerungsvorrichtung 2 unerlässlich sind. Als Signalisierungsdaten 33 werden Daten bezeichnet, die insbesondere die Kommunikation zwischen der Steuerungsvorrichtung 2 und der Integritätsüberwachungseinheit 3 betreffen. Diese Nutzdaten 32 und Signalisierungsdaten 33 werden der Integritätsüberwachungseinheit 3 bereitgestellt. Die Nutzdaten 32 werden dabei vorzugsweise rückwirkungsfrei unidirektional an die Integritätsüberwachungseinheit 3 übermittelt. Rückwirkungsfrei bedeutet hier, dass es nicht möglich ist, über diese Schnittstelle die Kontrolleinheit 13, die Funktionalität der Kontrolleinheit 13, die Integritätsüberwachungsdaten-Extraktionseinheit 15 oder deren Funktion zu beeinflussen. Die Signalisierungsdaten, die insbesondere Art und Umfang der bereitzustellenden Daten von der Integritätsüberwachungseinheit 3 an die Steuerungsvorrichtung 2 angeben oder Authentisierungsprozesse durchführen, werden bidirektional übertragen.

Die Integritätsüberwachungseinheit 3 umfasst eine Laufzeitüberwachungseinheit 20 mit einer Auswerteeinheit 21, eine Aktualisierungseinheit 22, einer Selbsttesteinheit 23 und einer Kompatibilitätsüberprüfungseinheit 24. Der Laufzeitüberwachungseinheit 20 werden Betriebszustandsdaten, insbesondere Referenzdaten 30 und Nutzdaten 32, zur Verfügung gestellt. Die Auswerteeinheit 21 überprüft die Zulässigkeit der empfangenen Nutzdaten 32 (Betriebszustandsdaten der Steuerungsvorrichtung 2) gemäß der Laufzeitprüfkonfiguration 31 und den Referenzdaten 30.

Die Aktualisierungseinheit 22 ermöglicht, dass die Laufzeit-überwachung aktualisiert werden kann. Dies ist unabhängig von der Aktualisierung der Steuerungsvorrichtung 2 möglich, sodass dies unabhängig von betrieblichen oder regulativen Einschränkungen erfolgen kann. Dadurch kann zeitnah auf aktuelle Angriffsmuster reagiert werden, indem eine aktualisierte Laufzeitprüfkonfiguration 31 und/oder Referenzdaten 30 eingespielt werden. Die Selbsttesteinheit 23 der Integritätsüberwachungseinheit 3 überwacht, dass die Laufzeit-Integritätsüberprüfung tatsächlich ordnungsgemäß funktioniert. Dadurch wird verhindert, dass ein Ausfall der Laufzeit-Integritätsüberprüfung nicht erkannt wird, sodass Angriffe auf die Steuerungsvorrichtung 2 unbemerkt blieben.

Die Kompatibilitätsüberprüfungseinheit 24 überprüft, ob die Integritätsüberwachungseinheit 3 tatsächlich für die Laufzeitintegritätsüberwachung der Steuerungsvorrichtung 2 geeignet ist. Dadurch wird vorteilhaft verhindert, dass eine inkompatible Integritätsüberwachungseinheit 3 verwendet wird. Dies könnte zu Fehlalarmen führen und damit den verlässlichen Betrieb des technischen Systems gefährden, oder es könnte dazu führen, dass Angriffe auf die Steuerungsvorrichtung 2 nicht verlässlich erkannt werden.

Als Betriebszustandsdaten, insbesondere als Nutzdaten 32, können laufende Prozesse, Tasks, eine Speicherauslastung, eine Prozessorlast, eine Eingangs-Ausgangs-Last und/oder Prüfwerte von Speicherbereichen, insbesondere von Firmware, RAM und/oder eines Konfigurationsspeichers, bereitgestellt werden. Ebenso können physikalische Parameter wie insbesondere die Temperatur des Prozessors mit übertragen werden.

Als Signalisierungsdaten 33 können insbesondere Authentisierungsdaten übertragen werden. Insbesondere kann sich die Integritätsüberwachungseinheit 3 gegenüber der Steuerungsvorrichtung 2 authentisieren.

In Abhängigkeit der Authentisierungszertifikate und/oder in Abhängigkeit einer Konfiguration kann die Steuerungsvorrichtung 2 ermitteln, welche Informationen, insbesondere welche Nutzdaten, herausgegeben werden. Vorteilhaft kann somit verhindert werden, dass Betriebszustandsdaten an ein unzulässiges Modul herausgegeben werden.

Weiterhin können als Signalisierungsdaten 33 Informationen darüber übermittelt werden, welche Daten in der Integritätsüberwachungseinheit 3 ausgewertet werden können. Insbesondere können Mindestanforderungen an die bereitzustellenden Informationen angegeben werden. In anderen Worten heißt das, dass die Daten festgelegt werden, die die Integritätsüberwachungseinheit 3 benötigt, um eine Überwachung durchführen zu können und/oder einen Status über eine aktuell laufende Überwachung melden zu können.

Als Signalisierungsdaten 33 können auch Daten bezeichnet werden, die dazu dienen, dass sich die Steuerungsvorrichtung 2 gegenüber der Integritätsüberwachungseinheit 3 identifiziert und/oder authentisiert. Dabei kann an die Integritätsüberwachungseinheit 3 eine Information von der Steuerungsvorrichtung 2 übertragen werden, die die Konfiguration der überwachten Steuerungsvorrichtung 2 beschreibt. Dadurch kann auch die Integritätsüberwachungseinheit 3 überprüfen, ob sie tatsächlich mit einem kompatiblen und dem korrekten Gerät verbunden ist. Vorteilhaft kann dadurch verhindert werden, dass fehlerhaft Integritätsverletzungen erkannt werden. Insbesondere kann auch überprüft werden, ob die installierte Firmware-Version unterstützt wird und/oder ob die erwarteten Projektierungsdaten konfiguriert sind. Die Laufzeit-Integritätsüberwachung erfolgt nur für eine kompatible und korrekte Steuerungsvorrichtung 2.

In der Integritätsüberwachungseinheit 3 kann in der Integritätsüberwachungsdaten-Extraktionseinheit auch niedergelegt werden, welche Reaktionen bei einer erkannten Integritätsverletzung angestoßen werden. Insbesondere kann als Reaktion ein Neustart oder das Aktivieren eines eigensicheren Betriebsmodus angestoßen werden, oder es kann eine Alarmmeldung, ein Alarmsignal oder ein Logeintrag generiert werden.

Weiterhin kann die Steuerungsvorrichtung 2 prüfen, ob tatsächlich eine Integritätsüberwachungseinheit 3 vorhanden und betriebsbereit ist. In einer möglichen Ausführung wird die Steuerungsvorrichtung 2 nur dann in einen regulären Betriebsmodus versetzt, wenn die Steuerungsvorrichtung 2 mit einer Integritätsüberwachungseinheit 3 verbunden ist. Dazu ermittelt die Steuerungsvorrichtung 2, ob und welche Integritätsüberwachungseinheit 3 verbunden ist. Außerdem können eine Selbsttestinformation und eine Kompatibilitätsinformation ermittelt werden. Abhängig vom Ergebnis aktiviert die Steuerungsvorrichtung 2 einen regulären Betriebsmodus oder einen Fehlerbetriebsmodus.

Weiterhin ist es ein einer weiteren Ausführung möglich, die Integritätsüberwachungseinheit während des Betriebs der Steuerungsvorrichtung 2 zu entfernen und anzustecken. Somit kann vorteilhaft die Integritätsüberwachungseinheit 3 im laufenden Betrieb der Steuerungsvorrichtung 2 getauscht werden. Die Steuerungsvorrichtung 2 kann dabei dokumentieren, ob und wann eine Integritätsüberwachungseinheit angesteckt war. Dazu ermittelt die Steuerungsvorrichtung 2, ob und welche Integritätsüberwachungseinheit 3 verbunden ist und generiert einen korrespondierenden Log-Eintrag.

In diesem Beispiel ist die Integritätsüberwachungseinheit 3 mechanisch verriegelt mit der Steuerungsvorrichtung 2 verbunden. In diesem Beispiel erfolgt die mechanische Verriegelung mittels einer Plombe. Es ist aber alternativ oder zusätzlich ebenso denkbar, dass eine Einweg-Rastvorrichtung eine Nietschraube oder eine Sicherheitsschraube eingesetzt wird, die beiden Komponenten miteinander mechanisch zu verriegeln. Vorteilhaft wird das unzulässige Entfernen der Integritätsüberwachungseinheit 3 erschwert oder verhindert. Weiterhin kann ein unzulässiges Entfernen der Integritätsüberwachungseinheit 3 bereits äußerlich an der Steuerungsvorrichtung 2, insbesondere an einer gebrochenen Plombe, erkannt werden.

In diesem Beispiel überwacht eine Integritätsüberwachungseinheit 3 eine Steuerungsvorrichtung 2. In einem weiteren Beispiel ist es aber ebenso möglich, dass eine Integritätsüberwachungseinheit 3 mehrere Steuerungsvorrichtungen 2 überwacht. Vorteilhaft kann die Anzahl der Integritätsüberwachungseinheiten 3 somit niedrig gehalten werden. Eine größere Integritätsüberwachungseinheit kann insbesondere auch ein leistungsfähigeres Sicherheitsmodul umfassen. Dies erhöht die Sicherheit der Integritätsüberwachung weiter und reduziert zudem die Kosten für eine Integritätsüberwachung während der Laufzeit der Steuerungsvorrichtung 2. Weiterhin kann gewährleistet werden, dass mehrere unterschiedliche Steuerungsvorrichtungen 2 mit denselben Kriterien überwacht werden.

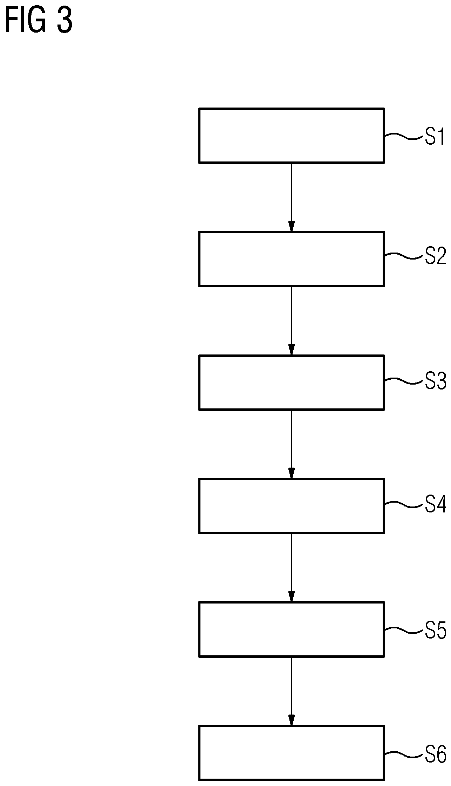

In Figur 3 ist ein Fließbild der Verfahrensschritte dargestellt. Zunächst erfolgt in einem ersten Schritt S1 das Bereitstellen der Integritätsüberwachungseinheit. Danach erfolgt in einem zweiten Schritt S2 das Anschließen der Integritätsüberwachungseinheit 3 an die Steuerungsvorrichtung 2. In einem dritten Schritt S3 erfolgt das Sammeln von Betriebszustandsdaten der Steuerungsvorrichtung 2 in der Automatisierungsvorrichtung 15. In einem vierten Schritt S4 erfolgt das Übertragen von Betriebszustandsdaten von der Automatisierungsvorrichtung 15 in die in Integritätsüberwachungseinheit 3. In einem fünften Schritt S5 erfolgt das Auswerten der Betriebszustandsdaten in der Integritätsüberwachungseinheit 3 zum Überprüfen eines Integritätsstatus der Steuerungsvorrichtung 2. In einem sechsten Schritt S6 erfolgt die Ausgabe eines Integritätsstatus.

Obwohl die Erfindung im Detail durch bevorzugte Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Integritätsüberwachungssystem
- 2: Steuerungsvorrichtung
- 3: Integritätsüberwachungseinheit
- 4: Steckverbindung
- 5: Ausgabeeinheit
- 6: Steuerungsautomatisierungseinheit
- 7: unidirektionale Nutzdatenverbindung
- 8: bidirektionale Signalisierungsdatenverbindung
- 10: Hardware
- 11: Firmware
- 12: Projektierungsdaten
- 13: Kontrolleinheit
- 14: Selbsttesteinheit
- 15: Integritätsüberwachungsdaten-Extraktionseinheit
- 20: Laufzeitüberwachungseinheit
- 21: Auswerteeinheit
- 22: Aktualisierungseinheit
- 23: Selbsttesteinheit
- 24: Kompatibilitätsüberprüfungseinheit
- 30: Referenzdaten
- 31: Laufzeitprüfkonfiguration
- 32: Nutzdaten
- 33: Signalisierungsdaten
- S1: Bereitstellen der Integritätsüberwachungseinheit
- S2: Anschließen der Integritätsüberwachungseinheit an die Steuerungsvorrichtung
- S3: Sammeln von Betriebszustandsdaten der Steuerungsvorrichtung in der Automatisierungsvorrichtung
- S4: Übertragen der Betriebszustandsdaten von der Automatisierungsvorrichtung an die Integritätsüberwachungseinheit
- S5: Auswerten der Betriebszustandsdaten in der Integritätsüberwachungseinheit zum Überprüfen eines Integritätsstatus der Steuerungsvorrichtung
- S6: Ausgabe eines Integritätsstatus

## Patentansprüche

1. Integritätsüberwachungssystem (1) zur Laufzeit-Integritätsüberwachung wenigstens einer Steuerungsvorrichtung (2) mit
- der wenigstens einen Steuerungsvorrichtung (2) umfassend eine Automatisierungsvorrichtung (15) zum Sammeln von Betriebszustandsdaten der Steuerungsvorrichtung (2),
- einer direkt mit der Steuerungsvorrichtung (2) lösbar verbindbaren Integritätsüberwachungseinheit (3) zum Überwachen des Integritätsstatus der Steuerungsvorrichtung (2) anhand von von der Automatisierungsvorrichtung (15) an die Integritätsüberwachungseinheit (3) übermittelten Betriebszustandsdaten.

2. Integritätsüberwachungssystem (1) mit einer Schnittstelleneinheit (4), die mit der Steuerungsvorrichtung (2) und der Integritätsüberwachungseinheit (3) verbunden ist.

3. Integritätsüberwachungssystem (1) gemäß Anspruch 2, wobei die Schnittstelleneinheit (4) eine RS232-Schnittstelle, eine USB-Schnittstelle, eine SPI-Schnittstelle, eine I2C-Schnittstelle oder ein Rückwandbus umfasst.

4. Integritätsüberwachungssystem (1) gemäß einem der Ansprüche 1 bis 3, wobei die Integritätsüberwachungseinheit (3) mit der Steuerungsvorrichtung (2) mechanisch verriegelt verbunden ist.

5. Integritätsüberwachungssystem (1) gemäß einem der Ansprüche 1 bis 4, wobei die Steuerungsvorrichtung (2) eine speicherprogrammierbare Steuerungsvorrichtung, insbesondere einer industriellen Anlage, ist.

6. Verfahren zum Betreiben eines Integritätsüberwachungssystems (1) mit folgenden Schritten:
- Bereitstellen des Integritätsüberwachungssystems (1) mit wenigstens einer Steuerungsvorrichtung (2) umfassend eine Automatisierungsvorrichtung (15) zum Sammeln von Betriebszustandsdaten der Steuerungsvorrichtung (2) und mit einer direkt mit der Steuerungsvorrichtung (2) lösbar verbindbaren Integritätsüberwachungseinheit (3) zum Überwachen des Integritätsstatus der Steuerungsvorrichtung (2) anhand von von der Automatisierungsvorrichtung (15) an die Integritätsüberwachungseinheit (3) übermittelten Betriebszustandsdaten,
- Anschließen der Integritätsüberwachungseinheit (3) an die Steuerungsvorrichtung (2) zur Datenübertragung,
- Sammeln von Betriebszustandsdaten der Steuerungsvorrichtung (2) in der Automatisierungsvorrichtung (15),
- Übertragen der Betriebszustandsdaten von der Automatisierungsvorrichtung (15) der Steuerungsvorrichtung (2) an die Integritätsüberwachungseinheit (3),
- Auswerten der Betriebszustandsdaten in der Integritätsüberwachungseinheit (3) zum Überprüfen eines Integritätsstatus der Steuerungsvorrichtung (2),
- Ausgabe eines Integritätsstatus.

7. Verfahren nach Anspruch 6, wobei die Betriebszustandsdaten kryptographisch geschützt von der Steuerungsvorrichtung (2) an die Integritätsüberwachungseinheit (3) übertragen werden.

8. Verfahren nach einem der Ansprüche 6 oder 7, wobei als Betriebszustandsdaten laufende Prozesse, Tasks, eine Speicherauslastung, eine Prozessorlast, eine Eingangs-Ausgangs-Last und/oder Prüfwerte von Speicherbereichen, insbesondere von Firmware, RAM und/oder eines Konfigurationsspeichers, bereitgestellt werden.

9. Verfahren nach einem der Ansprüche 6 bis 8, wobei die Integritätsüberwachungseinheit (3) während eines laufenden Betriebs der Steuerungsvorrichtung (2) abgenommen wird, aktualisiert wird und wieder an die Steuerungsvorrichtung (2) angeschlossen wird.

10. Verfahren nach einem der Ansprüche 6 bis 9, wobei sich die Integritätsüberwachungseinheit (3) gegenüber der Steuerungsvorrichtung (2) authentisiert und/oder die Steuerungsvorrichtung (2) die Integritätsüberwachungseinheit (3) authentifiziert.

11. Verfahren nach einem der Ansprüche 6 bis 10, wobei nach dem Auswerten der Betriebszustandsdaten und einem Erkennen einer Integritätsverletzung als Integritätsstatus ein Neustart, ein sicherer Betriebsmodus, eine Alarmmeldung und/oder ein Logeintrag erfolgt.

12. Verfahren nach einem der Ansprüche 6 bis 11, wobei die Integritätsüberwachungseinheit (3) Anforderungen an Art und Umfang der Betriebszustandsdaten an die Steuerungsvorrichtung (2) übermittelt.

13. Verfahren nach Anspruch 12, wobei die Anforderungen Mindestanforderungen an die Betriebszustandsdaten darstellen.

14. Verfahren nach einem der Ansprüche 6 bis 13, wobei die Betriebszustandsdaten Nutzdaten (32) und Signalisierungsdaten (33) umfassen, wobei die Nutzdaten (32) rückwirkungsfrei unidirektional übertragen werden.

15. Integritätsüberwachungseinheit (3) zum Überwachen eines Integritätsstatus einer Steuerungsvorrichtung (2), wobei die Integritätsüberwachungseinheit (3) mit der Steuerungsvorrichtung (2) lösbar verbindbar ausgestaltet ist.
